# EUROPÄISCHE PATENTSCHRIFT

(11) **EP 4 393 926 B1**
(45) Veröffentlichungstag und Bekanntmachung des Hinweises auf die Patenterteilung: **02.07.2025**
(21) Anmeldenummer: 22216771.0
(22) Anmeldetag: 27.12.2022
(51) Int. Cl.: C07F 9/145, C07F 9/572

(54) **VERFAHREN ZUR HERSTELLUNG VON MONOPHOSPHITEN**
PROCESS FOR THE PREPARATION OF MONOPHOSPHITES
PROCÉDÉ DE PRÉPARATION DE MONOPHOSPHITES

(43) Veröffentlichungstag der Anmeldung: 03.07.2024
(73) Patentinhaber: Evonik Oxeno GmbH & Co. KG, 45772 Marl (DE)
(72) Erfinder: SALE, Anna Chiara, 45657 Recklinghausen (DE); FRANKE, Robert, 45772 Marl (DE); FRIDAG, Dirk, 45721 Haltern am See (DE); KUCMIERCZYK, Peter, 44628 Herne (DE); MARKOVIC, Ana, 45721 Haltern am See (DE); BÖRNER, Armin, 18059 Rostock (DE); HOLZ, Jens, 18196 Kessin (DE); ROMEIKE, Kerstin, 18109 Rostock (DE); WENZEL, Gudrun, 18196 Kessin (DE)
(74) Vertreter: Evonik Patent Association

(56) Entgegenhaltungen:
- WO-A1-2015/176927
- ISMAIL M. N. ET AL: "Preparation and evaluation of some novel organo-phosphorus compounds as antioxidants and antifatigue agents in rubber", JOURNAL OF APPLIED POLYMER SCIENCE, vol. 83, no. 14, 14 February 2002 (2002-02-14), US, pages 2984 - 2992, XP093054143, ISSN: 0021-8995, DOI: 10.1002/app.2327
- SHIMIDZU, TAKEO; YAMANA, KAZUSHIGE; KANDA, NAOYA; MAIKUMA, SEIICHIRO: "A simple and convenient synthesis of 3'-5'- or 2'-5'-linked oligoribonucleotide by polymerization of unprotected ribonucleoside using phosphorus tris-azole", NUCLEIC ACIDS RESEARCH, vol. 12, no. 7, 1 January 1984 (1984-01-01), pages 3257 - 3270, XP009544836, ISSN: 0305-1048

## Beschreibung

Die Erfindung betrifft ein Verfahren zur Herstellung von Monophosphiten und die zu Herstellung verwendete Verbindung.

Die Herstellung von Monophosphiten erfolgt klassischer Weise unter Einsatz von Cl-haltigen Verbindungen oder über CI-haltige Zwischenstufen.

Wie in WO 2015/176929 A1 beschrieben verbleiben Chlorreste aus der Synthese in der Organophosphorverbindung, welche beim Einsatz der Organophosphorverbindungen zu Problemen führen. So kann beispielsweise der Stahl des Reaktors durch das Chlor angegriffen werden. WO 2015/176927 A1 offenbart ein Verfahren zur Herstellung von Phosphit-Derivaten.

Ein Verfahren zur Herstellung von Phosphit-Derivaten wird in Journal of Applied Polymer Science 2002, 83(14), 2984-2992.

Monophosphite, welche unter Einsatz von Cl-haltigen Verbindungen herstellt wurden, müssen im Anschluss an die Synthese aufwendig aufgereinigt werden, um den Cl-Gehalt zu reduzieren. Doch selbst nach aufwendiger Aufreinigung verblieben noch immer CI-Reste im Monophosphit, welche beim weiteren Einsatz der Verbindung zu Problemen führen.

Die technische Aufgabe der Erfindung ist die Bereitstellung eines Verfahrens, bei dem die in Zusammenhang mit dem Stand der Technik auftretenden Probleme reduziert beziehungsweise beseitigt werden.

Die Aufgabe wird gelöst durch ein Verfahren gemäß Anspruch 1.

Verfahren umfassend die Verfahrensschritte:
a) Vorlage einer Verbindung Y, wobei Y für einen Fünfring steht, bei dem mindestens ein C-Atom durch ein N-Atom ersetzt ist;
b) Zugabe von P(NX₂)₃, wobei X für -(C₁-C₆)-Alkyl steht;
c) Zugabe einer Verbindung gemäß der Formel (I): 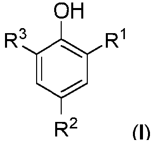
wobei R¹, R², R³ ausgewählt sind aus: -H, -(C₁-C₁₂)-Alkyl, -O-(C₁-C₁₂)-Alkyl, -(C₆-C₁₀)-Aryl, -CN, - NO₂.

Beispiele für Fünfring bei dem ein C-Atom durch ein N-Atom ersetzt ist sind:
Pyrrolidin, 2-Pyrrolin, 3-Pyrrolin, Azol.

Beispiele für Fünfring bei dem zwei C-Atom durch N-Atome ersetzt wurden sind: Diazolidin, 1,2-Diazol, 1,3-Diazol.

Beispiele für Fünfring bei dem drei C-Atom durch N-Atome ersetzt wurden sind: 1,2,3-Triazolidin, 1,2,4-Triazolidin, 1,2,3-Triazol, 1,2,4-Triazol.

Beispiele für Fünfring bei dem vier C-Atom durch N-Atome ersetzt wurden sind: Tetrazolidin, 5H-Terazol, 2,5-Dihydro-1H-tetrazol.

Beispiel für Fünfring bei dem fünf C-Atom durch N-Atome ersetzt wurden sind: 1H-Pentazol.

In einer Variant des Verfahrens weist der Fünfring (Y) mindestens eine Doppelbindung auf.

In einer Variant des Verfahrens weist der Fünfring (Y) zwei Doppelbindung auf.

In einer Variant des Verfahrens weist der Fünfring (Y) mindestens eine N-H-Bindung auf.

In einer Variant des Verfahrens weist der Fünfring (Y) mindestens zwei N-Atome auf.

In einer Variant des Verfahrens weist der Fünfring (Y) mindestens drei N-Atome auf.

In einer Variant des Verfahrens weist der Fünfring (Y) vier N-Atome auf.

In einer Variant des Verfahrens steht Y für die folgende Verbindung:

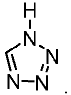

In einer Variant des Verfahrens steht X für -(C₁-C₂)-Alkyl.

In einer Variant des Verfahrens steht X für -CH₃.

In einer Variant des Verfahrens sind R¹, R², R³ ausgewählt aus: -H, -(C₁-C₁₂)-Alkyl, -O-(C₁-C₁₂)-Alkyl, -(C₆-C₁₀)-Aryl.

In einer Variant des Verfahrens sind R¹, R², R³ ausgewählt aus: -H, -(C₁-C₁₂)-Alkyl, -O-(C₁-C₁₂)-Alkyl.

In einer Variant des Verfahrens sind R¹, R², R³ ausgewählt aus: -H, -(C₁-C₁₂)-Alkyl.

In einer Variant des Verfahrens sind R¹, R², R³ ausgewählt aus: -H, -CH₃, -O-CH₃, *-^{tert}*Bu.

In einer Variant des Verfahrens weist die Verbindung gemäß der Formel (I) die Struktur (4) auf:

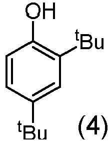

In einer Variant des Verfahrens umfasst dieses den zusätzlichen Verfahrensschritt d):
d) Zugabe eines Lösungsmittels.

In einer Variant des Verfahrens ist das Lösungsmittel ausgewählt aus: Acetonitril (ACN), Toluol, Xylol, THF, Heptan.

In einer Variant des Verfahrens ist das Lösungsmittel Acetonitril (ACN).

In einer Variant des Verfahrens erfolgt die Synthese in Abwesenheit von Cl.

Im Folgenden soll die Erfindung anhand eines Ausführungsbeispieles näher erläutert werden.

### Synthesen von Alkanox

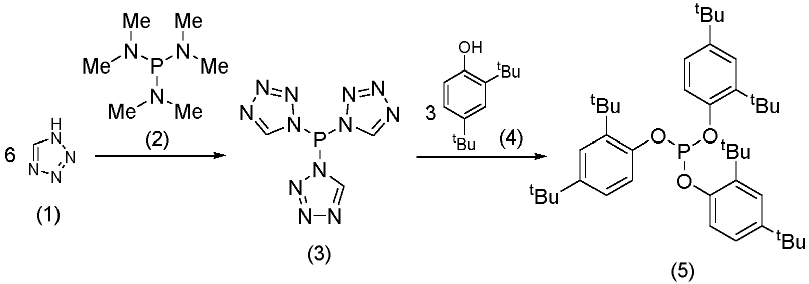

Zur Bildung des Tri(1*H*-tetrazo-1-yl)phosphins **(3)** gibt man zu einer 0.45 M Lösung von Tetrazol (1) in Acetonitril (13.4 ml, 6 mmol) HMPT **(2)** (163 mg, 1 mmol) und rührt bei Raumtemperatur fünf Minuten unter Argon. Anschließend versetzt man die Lösung mit drei Äquivalenten 2,4-Di-*tert*.-butylphenol **(4)** (619 mg, 3 mmol). Die Reaktionsmischung wird nun unter Argon bei 60 °C für etwa 20 Stunden weiter gerührt. Nach 15-30 Minuten fällt aus der Lösung allmählich ein weißer Niederschlag aus. Zur Aufarbeitung wird der Niederschlag unter anaeroben Bedingungen abfiltriert, einmal mit Acetonitril (2 ml) nachgewaschen und unter Vakuum getrocknet.

Ausbeute **(5):** 0.50 g weißer Feststoff (= 77%).

³¹P-NMR (CD₂Cl₂): 129.9 ppm.

¹H-NMR (CD₂Cl₂): 7.40 (3H, d, *J* 2.5 Hz, 3xHₐᵣ), 7.40 (3H, dd, *J* 8.5, 2.1 Hz, 3xHₐᵣ), 7.12 (3H, dd, *J* 8.5, 2.5 Hz, 3xHₐᵣ), 1.41 (27H, s, 3xC(CH₃)₃), 1.30 (27H, s, 3xC(CH₃)₃).

¹³C-NMR (CD₂Cl₂): 149.5 (d, *J* 4.0 Hz, 3xCₐᵣ-O), 146.2 (3xCₐᵣ), 139.4 (d, *J* 2.6 Hz, Cₐᵣ), 125.0 (3xCₐᵣH), 124.0 (3xCₐᵣH), 119.2 (d, *J* 18.2 Hz, 3xCₐᵣH), 35.4 (3x^{t}C), 34.8 (3x^{t}C), 31.7 (9xCH₃), 30.4 (9xCH₃).

Durch die neue Syntheseroute ist es möglich auf CI-haltige Verbindungen zu verzichten. Dies erspart zum einen die aufwendige Aufreinigung des Diphosphits nach der Synthese, zum anderen wird auch der Eintrag von Rest-Cl in den Reaktor vermieden.

## Patentansprüche

1. Verfahren umfassend die Verfahrensschritte:
a) Vorlage einer Verbindung Y, wobei Y für einen Fünfring steht, bei dem mindestens ein C-Atom durch ein N-Atom ersetzt ist;
b) Zugabe von P(NX₂)₃, wobei X für -(C₁-C₆)-Alkyl steht;
c) Zugabe einer Verbindung gemäß der Formel (I): 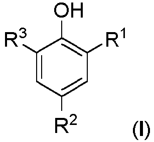
wobei R¹, R², R³ ausgewählt sind aus: -H, -(C₁-C₁₂)-Alkyl, -O-(C₁-C₁₂)-Alkyl, -(C₆-C₁₀)-Aryl, -CN, - NO₂.

2. Verfahren nach Anspruch 1,
wobei der Fünfring (Y) mindestens eine Doppelbindung aufweist.

3. Verfahren nach einem der Ansprüche 1 oder 2,
wobei der Fünfring (Y) zwei Doppelbindung aufweist.

4. Verfahren nach einem der Ansprüche 1 bis 3,
wobei der Fünfring (Y) mindestens eine N-H-Bindung aufweist.

5. Verfahren nach einem der Ansprüche 1 bis 4,
wobei der Fünfring (Y) mindestens zwei N-Atome aufweist.

6. Verfahren nach einem der Ansprüche 1 bis 5,
wobei der Fünfring (Y) mindestens drei N-Atome auf.

7. Verfahren nach einem der Ansprüche 1 bis 6,
wobei der Fünfring (Y) vier N-Atome auf.

8. Verfahren nach einem der Ansprüche 1 bis 7,
wobei Y für die folgende Verbindung steht:

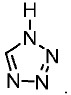

9. Verfahren nach einem der Ansprüche 1 bis 8, wobei X für -(C₁-C₂)-Alkyl steht.

10. Verfahren nach einem der Ansprüche 1 bis 9,
wobei X für -CH₃ steht.

11. Verfahren nach einem der Ansprüche 1 bis 10,
wobei R¹, R², R³ ausgewählt sind aus: -H, -(C₁-C₁₂)-Alkyl, -O-(C₁-C₁₂)-Alkyl, -(C₆-C₁₀)-Aryl.

12. Verfahren nach einem der Ansprüche 1 bis 6,
wobei R¹, R², R³ ausgewählt sind aus: -H, -(C₁-C₁₂)-Alkyl, -O-(C₁-C₁₂)-Alkyl.

13. Verfahren nach einem der Ansprüche 1 bis 12,
umfassen den zusätzlichen Verfahrensschritt d):
d) Zugabe eines Lösungsmittels.

14. Verfahren nach Anspruch 13,
wobei das Lösungsmittel ausgewählt ist aus: Acetonitril (ACN), Toluol, Xylol, THF, Heptan.

## Claims

1. Process comprising the process steps of:
a) initially charging a compound Y, wherein Y is a five-membered ring in which at least one carbon atom has been replaced by a nitrogen atom;
b) adding P(NX₂)₃, wherein X is -(C₁-C₆)-alkyl;
c) adding a compound according to the formula (I): 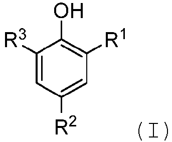
wherein R¹, R², R³ are selected from: -H, -(C₁-C₁₂)-alkyl, -O-(C₁-C₁₂)-alkyl, -(C₆-C₁₀)-aryl, -CN, -NO₂.

2. Process according to Claim 1,
wherein the five-membered ring (Y) has at least one double bond.

3. Process according to either of Claims 1 and 2, wherein the five-membered ring (Y) has two double bonds.

4. Process according to any of Claims 1 to 3,
wherein the five-membered ring (Y) has at least one N-H bond.

5. Process according to any of Claims 1 to 4,
wherein the five-membered ring (Y) has at least two nitrogen atoms.

6. Process according to any of Claims 1 to 5,
wherein the five-membered ring (Y) has at least three nitrogen atoms.

7. Process according to any of Claims 1 to 6,
wherein the five-membered ring (Y) has four nitrogen atoms.

8. Process according to any of Claims 1 to 7,
wherein Y is the following compound:

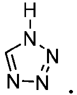

9. Process according to any of Claims 1 to 8,
wherein X is -(C₁-C₂)-alkyl.

10. Process according to any of Claims 1 to 9,
wherein X is -CH₃.

11. Process according to any of Claims 1 to 10,
wherein R¹, R², R³ are selected from: -H, -(C₁-C₁₂)-alkyl, -O-(C₁-C₁₂)-alkyl, -(C₆-C₁₀)-aryl.

12. Process according to any of Claims 1 to 6,
wherein R¹, R², R³ are selected from: -H, -(C₁-C₁₂)-alkyl, -O-(C₁-C₁₂)-alkyl.

13. Process according to any of Claims 1 to 12, comprising the additional process step d) of: d) adding a solvent.

14. Process according to Claim 13,
wherein the solvent is selected from: acetonitrile (ACN), toluene, xylene, THF, heptane.

## Revendications

1. Procédé comprenant les étapes de procédé :
a) disposition préalable d'un composé Y, Y représentant un cycle à cinq chaînons dans lequel au moins un atome de C est remplacé par un atome de N ;
b) ajout de P(NX₂)₃, X représentant -(C₁-C₆)-alkyle ;
c) ajout d'un composé selon la formule (I) : 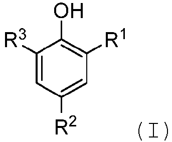
R¹, R², R³ étant choisis parmi : -H, -(C₁-C₁₂)-alkyle, -O-(C₁-C₁₂)-alkyle, -(C₆-C₁₀)-aryle, -CN, -NO₂.

2. Procédé selon la revendication 1,
le cycle à cinq chaînons (Y) présentant au moins une double liaison.

3. Procédé selon l'une des revendications 1 ou 2,
le cycle à cinq chaînons (Y) présentant deux doubles liaisons.

4. Procédé selon l'une des revendications 1 à 3,
le cycle à cinq chaînons (Y) présentant au moins une liaison N-H.

5. Procédé selon l'une des revendications 1 à 4,
le cycle à cinq chaînons (Y) présentant au moins deux atomes de N.

6. Procédé selon l'une des revendications 1 à 5,
le cycle à cinq chaînons (Y) présentant au moins trois atomes de N.

7. Procédé selon l'une des revendications 1 à 6,
le cycle à cinq chaînons (Y) présentant quatre atomes de N.

8. Procédé selon l'une des revendications 1 à 7,
Y représentant le composé suivant :

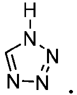

9. Procédé selon l'une des revendications 1 à 8,
X représentant -(C₁-C₂)-alkyle.

10. Procédé selon l'une des revendications 1 à 9,
X représentant -CH₃.

11. Procédé selon l'une des revendications 1 à 10,
R¹, R², R³ étant choisis parmi : -H, -(C₁-C₁₂)-alkyle, -O-(C₁-C₁₂)-alkyle, - (C₆-C₁₀)-aryle.

12. Procédé selon l'une des revendications 1 à 6,
R¹, R², R³ étant choisis parmi : -H, -(C₁-C₁₂)-alkyle, -O-(C₁-C₁₂)-alkyle.

13. Procédé selon l'une des revendications 1 à 12, comprenant l'étape de procédé supplémentaire d) : d) ajout d'un solvant.

14. Procédé selon la revendication 13,
le solvant étant choisi parmi : l'acétonitrile (ACN), le toluène, le xylène, le THF, l'heptane.
